# EUROPEAN PATENT SPECIFICATION

(11) **EP 0 423 080 B1**
(45) Date of publication and mention of the grant of the patent: **07.01.1993**
(21) Application number: 90830433.0
(22) Date of filing: 02.10.1990
(51) Int. Cl.: B62D 15/02, B60K 23/08

(54) **A device for measuring the steering angle for an electronic control system for the differentials and four-wheel drive of a tractor**
Einrichtung zur Messung des Lenkwinkels für ein elektronisches Steuersystem der Differentiale und des Vierradantriebs eines Traktors
Dispositif pour mesurer l'angle de direction pour une commande électronique d'un différentiel et un entraînement à quatre roues motrices d'un tracteur

(30) Priority: 10.10.1989 IT 5340989 U
(43) Date of publication of application: 17.04.1991
(73) Proprietor: SAME S.p.A., I-24047 Treviglio (Bergamo) (IT)
(72) Inventor: Scotti, Alessandro, I-24052 Azzano S. Paolo (Bergamo) (IT)
(74) Representative: Bosotti, Luciano

(56) References cited:
- EP-A- 0 330 632
- WO-A-86/01467
- PATENT ABSTRACTS OF JAPAN, vol. 9, no. 220 (E-341)[1943], 6th September 1985; & JP-A-60 78 873 (NIPPON JIDOSHA BUHIN SOGO KENYUSHO K.K.) 04-05-1985

## Description

The present invention relates to a device for measuring the steering angle for an electronic control system for the differentials and four-wheel drive of a tractor.

As is well known, such a system includes an electronic control unit supplied by sensors for sensing the operating conditions of the tractor and arranged to pilot the electric actuators of the devices for engaging and disengaging four-wheel drive and for locking and releasing the differentials. Systems of this type are described, for example, in French Utility Model Application No. 88 13 941 (corresponding to the French publication 2622159, published 28.04.1989) in the name of the same Applicant.

More particularly, the invention relates to a measurement device for such systems which can be fitted to a tractor in which the steerable wheels are mounted on respective hubs articulated to the ends of an axle body by means of respective pairs of swivel pins, and which comprises a potentiometric detector operatively associated with the articulation between one of the pins and the axle body and including a stationary body fixed to the axle body and a transmission rod which can rotate relative to the body of the detector and is rotated by the pin.

A measuring device of this type is known from EP-A-330 632.

The object of the present invention is to provide a measuring device of the type defined above which is simpler, cheaper and more practical to produce and to install.

According to the invention, this object is achieved by virtue of the fact that the body of the potentiometric detector is housed in a protective casing fixed to the axle body by means of a bracket-like support and that the transmission rod of the detector has an eccentric axial appendage engaged in an eccentric axial hole in the pin.

Conveniently, the protective casing has a tubular appendage at the bottom and a corresponding axial shank of the pin in which the eccentric hole is formed is coupled sealingly for rotation therein.

The invention will now be described in detail by way of non-limiting example, which shows schematically, in partial section, part of an axle of an agricultural tractor with which a device for measuring the steering angle according to the invention is associated.

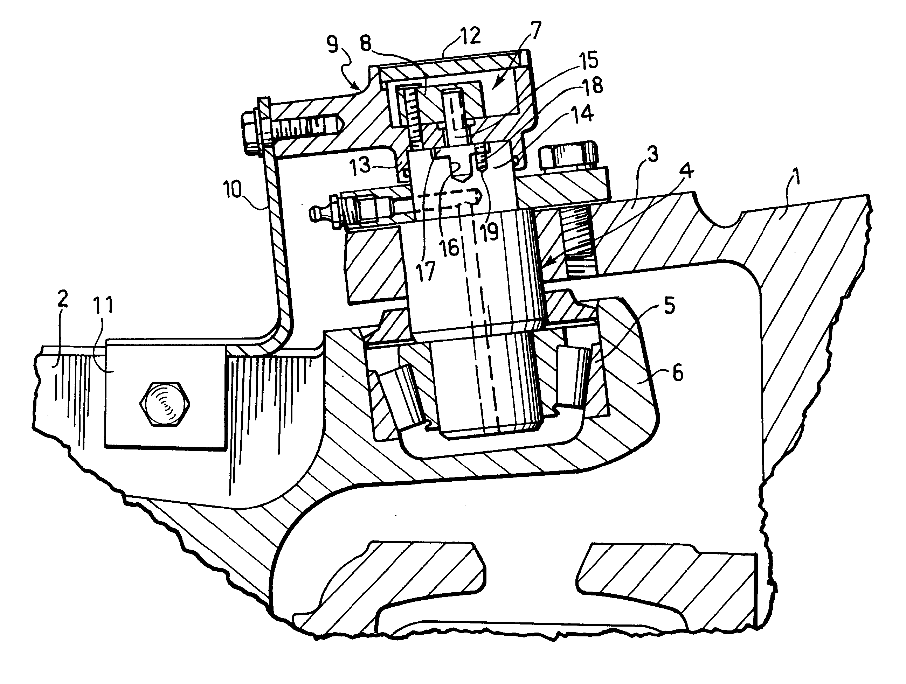

With reference to the drawing, part of a forked support for the hub of a steerable front wheel, not illustrated, of an agricultural tractor is schematically indicated 1 and is situated at one end of an axle body 2. The forked support 1 has two arms, a lower arm and an upper arm respectively, only the second of which, indicated 3, is shown in the drawing, and these carry respective pins aligned along a substantially vertical common axis, of which only the upper pin 4 associated with the arm 3 is shown in the drawing. The pin 4 is supported rotatably on a boss 6 of the axle body 2 by means of a rolling bearing 5.

A continuous-measurement, electro-mechanical sensor or transducer of potentiometric type, generally indicated 7, is operatively associated with the articulation between the pin 4 and the respective boss 6 of the axle body 2 for measuring the steering angle of the wheel.

The sensor 7 includes a body 8 fixed in a protective casing 9 which in turn is supported on the axle body 2 by a bracket 10 with a fastening 11.

The casing 9 has a cover 12 at the top for protecting the body 8 of the sensor 7 and has a tubular appendage 13 at the bottom, in which a corresponding axial shank 14 of the pin 4 that projects above the arm 3 of the forked support 1 is coupled sealingly for rotation.

A transmission rod 15 associated with the body 8 of the sensor 7 projects below the casing 9 and is fitted into a central axial hole 16 in the appendage 14 of the pin 4. The rod 15 has an annular flange 17 carrying an eccentric axial peg 18 which in turn is engaged in an eccentric axial hole 19 in the appendage 14 of the pin 4.

In operation, a rotation of the pin 4 resulting from a steering movement of the wheel causes a corresponding rotation of the rod 15 by means of the eccentric peg 18 and electrical signals indicative of the steering angle are consequently generated by the sensor 7. These signals are supplied through conductors, not shown, to an electronic control unit, also not shown. In known manner, the electronic unit is arranged to pilot the electric actuators of the devices for engaging and disengaging four-wheel drive and/or for locking and releasing the differentials of the tractor, so as to switch these devices automatically and reversibly to the condition which corresponds to the disengagement of four-wheel drive and the release of the differentials when the steering angle detected by the sensor 7 exceeds a predetermined threshold value.

The advantage of the above-described arrangement of the sensor 7 lies in the fact that the sensor can be installed quickly and easily and, in the installed condition, is effectively protected and covered by the casing 9.

## Claims

1. A device for measuring the steering angle for an electronic control system for the differentials and four-wheel drive of a tractor, in which the steerable wheels are mounted on respective hubs articulated to the ends of an axle body by means of respective pairs of swivel pins (4), comprising a potentiometric detector (7) which is operatively associated with the articulation between one of the pins and the axle body (2) and includes a stationary body (8) fixed to the axle body (2) and a transmission rod (15) which can rotate relative to the body of the detector and is rotated by the pin, characterised in that the body (8) of the potentiometric detector (7) is housed in a protective casing (9) fixed to the axle body (2) by means of a bracket-like support (10) and in that the transmission rod (15) of the detector (7) has an eccentric axial appendage (14) engaged in an eccentric axial hole (19) in the pin.

2. A measuring device according to Claim 1, characterised in that the protective casing (9) has a tubular appendage (13) at its bottom and a corresponding axial shank (14) of the pin (4) in which the eccentric hole (19) is formed is coupled sealingly for rotation therein.

## Patentansprüche

1. Vorrichtung zum Messen des Lenkwinkels für ein elektronisches Steuersystem für die Differentiale und den Vierradantrieb eines Traktors, bei dem die lenkbaren Räder auf entsprechenden Naben befestigt sind, die an den Enden eines Achskörpers mit Hilfe von entsprechenden Paaren von Achsschenkelbolzen (4) gelenkig befestigt sind, und die einen Potentiometerfühler (7) besitzt, der betriebsmäßig der Gelenksverbindung zwischen einem der Bolzen und dem Achskörper (2) zugeordnet ist und einen ortsfesten Körper (8), der am Achskörper (2) angebracht ist, sowie eine Übertragungsstange (15) aufweist, die sich relativ zum Körper des Fühlers drehen kann und vom Bolzen in Drehung versetzt wird, dadurch gekennzeichnet, daß der Körper (8) des Potentiometerfühlers (7) in einem Schutzgehäuse (9) untergebracht ist, das am Achskörper (2) mit Hilfe einer stützenartigen Halterung (10) befestigt ist, und daß die Übertragungsstange (15) des Fühlers (7) eine exzentrische, axiale Verlängerung (14) besitzt, die mit einer exzentrischen, axialen Öffnung (19) im Bolzen in Eingriff steht.

2. Meßvorrichtung gemäß Anspruch 1, dadurch gekennzeichnet, daß das Schutzgehäuse (9) an seinem Boden eine rohrartige Verlängerung (13) besitzt, wobei ein entsprechender axialer Schaft (14) des Bolzens (4), in dem die exzentrische Öffnung (19) ausgebildet ist, abgedichtet damit gekuppelt ist, um sich darin zu drehen.

## Revendications

1. Dispositif pour mesurer l'angle de direction d'un système de commande électronique pour les différentiels et l'entraînement à quatre roues motrices d'un tracteur, dans lequel les roues directrices sont montées sur des moyeux respectifs articulés aux extrémités d'un corps d'essieu au moyen de couples respectifs de pivots de direction (4), comprenant un capteur potentiométrique (7) qui est associé en fonctionnement avec l'articulation entre l'un des pivots et le corps d'essieu (2) et comporte un corps fixe (8) solidaire du corps d'essieu (2) et une tige de transmission (15) qui peut tourner par rapport au corps du capteur et qui est entraînée en rotation par le pivot, caractérisé en ce que le corps (8) du capteur potentiométrique (7) est placé dans un boîtier de protection (9) fixé au corps d'essieu (2) au moyen d'un support en forme d'étrier (10) et en ce que la tige de transmission (15) du capteur (7) a un prolongement axial excentré (14) engagé dans un trou axial excentré (19) pratiqué dans le pivot.

2. Dispositif de mesure selon la revendication 1, caractérisé en ce que le boîtier de protection (9) a un prolongement tubulaire (13) à sa base et une tige axiale correspondante (14) du pivot (4) dans laquelle le trou excentré (19) est formé est couplée de façon hermétique pour tourner à l'intérieur de celui-ci.
